## Europäisches Patentamt
## European Patent Office
## Office européen des brevets

(11) Veröffentlichungsnummer: **0 137 277**
**B1**

(12) **EUROPÄISCHE PATENTSCHRIFT**

(45) Veröffentlichungstag der Patentschrift:
**04.11.87**

(21) Anmeldenummer: **84110250.2**

(22) Anmeldetag: **29.08.84**

(51) Int. Cl.⁴: **H 04 N 11/06**

(54) Schaltung zur Analog/Digital-Wandlung eines Farbfernsehsignals.

(30) Priorität: **14.09.83 DE 3333071**

(43) Veröffentlichungstag der Anmeldung:
**17.04.85 Patentblatt 85/16**

(45) Bekanntmachung des Hinweises auf die Patenterteilung:
**04.11.87 Patentblatt 87/45**

(84) Benannte Vertragsstaaten:
**AT BE CH DE FR GB IT LI LU NL SE**

(56) Entgegenhaltungen:
**DE-A-3 305 919**
**DE-B-2 644 706**

**FERNSEH- UND KINO-TECHNIK, Dezember 1980,
Heft 12, 34. Jahrgang, Heidelberg; G.BRAND,
G.MÜLLER, H.SCHÖNFELDER, K.-P.WENDLER: "
"Timeplex" - ein serielles Farbcodierverfahren für
Heim-Videorecorder" Seiten 451-458**

(73) Patentinhaber: **Deutsche Thomson- Brandt GmbH,
Hermann- Schwer- Strasse 3 Postfach 2060,
D-7730 Villingen- Schwenningen (DE)**

(72) Erfinder: **Geiger, Erich, Panoramaweg 19, D-7731
Unterkirnach (DE)**
Erfinder: **Otto, Bernhard, Überruckweg 13, D-7730
VS- Rietheim (DE)**
Erfinder: **Kaaden, Jürgen, Im Tannhörnle 10, D-7730
VS- Pfaffenweiler (DE)**

## Beschreibung

Beim Farbfernsehen werden bekanntlich für die Bildwiedergabe drei Signale übertragen, nämlich das kompatible Leuchtdichtesignal Y und die beiden Farbdifferenzsignale (B-Y) und (R-Y). Beim Farbfernseh-Rundfunk wird das Leuchtdichtesignal Y durch Amplitudenmodulation eines Bildträgers und die beiden Farbdifferenzsignals durch Quadraturmodulation eines Farbträgers übertragen.

Wenn innerhalb eines Übertragungsweges eine digitale Signalübertragung erfolgt, müssen die drei analogen Signale mit A/D-Wandlern in digitale Signale umgewandelt werden. Ein Beispiel für eine derartige digitale Signalübertragung ist das sogenannte Timeplex-System für die Übertragung oder Aufzeichnung von Farbfernsehsignalen, wie es in "Fernseh- und Kino-Technik" 1983, Seite 187-196, insbesondere Seite 193-194 beschrieben ist. Bei diesem System werden für eine Übertragung oder Aufzeichnung alle Signale zeitlich komprimiert und nach der Übertragung und Aufzeichnung wieder zeitlich expandiert. Die A/D-Wandlung und die D/A-Wandlung sind dabei erforderlich, weil die zur Zeitkompression und Zeitexpansion dienenden getakteten Speicher digitale Signale verarbeiten. Bei dem Timeplex-System werden von Zeile zu Zeile abwechselnd einmal das zeitkomprimierte Farbdifferenzsignal (B-Y) und das zeitkomprimierte Leuchtdichtesignal Y und zum anderen das zeitkomprimierte Farbdifferenzsignal (R-Y) und das zeitkomprimierte Leuchtdichtesignal Y übertragen oder aufgezeichnet.

Die Signale Y, (B-Y), (R-Y) sind in der Amplitude voneinander unabhängig und dürfen daher nicht vermischt werden. Deshalb sind bei der A/D-Wandlung an sich drei getrennte A/D-Wandler erforderlich. Wegen der unterschiedlichen Amplituden der Signale kann der verfügbare Aussteuerbereich der Wandler nicht immer voll ausgenutzt werden, so daß insbesondere bei kleinen Signalamplituden ein geringer Störabstand entsteht.

Der Erfindung liegt die Aufgabe zugrunde, eine möglichst gute, von der jeweiligen Signalamplitude unabhängige Ausnutzung des Aussteuerbereiches der Wandler zu erzielen.

Diese Aufgabe wird durch die im Anspruch 1 beschriebene Erfindung gelöst. Vorteilhafte Weiterbildungen der Erfindung sind in den Unteransprüchen beschrieben.

Es ist zwar eine Schaltung bekannt (DE-OS-33 05 919), bei der der Dynamikbereich des zu digitalisierenden Analogsignals so geregelt wird, daß die digitalen Signale einen bestimmten Wertebereich einnehmen. Dabei handelt es sich aber lediglich um eine bekannte Dynamikregelung im Sinne einer automatischen Verstärkungsregelung. Es wird dabei nicht der Schritt unternommen, auf der Sendeseite zum Zwecke einer von der Signalamplitude unabhängigen Ausnutzung des Aussteuerbereiches der Wandler absichtlich die Amplitude des Signales zu verfälschen und mittels einer zusätzlich übertragenen Stellgröße auf der Empfangsseite die verfälschte Amplitude des Signals wieder zu korrigieren. Die Übertragung einer Stellgröße und die Rücksteuerung der Amplitude ist dort nicht vorgesehen und auch nicht notwendig.

Die Erfindung beruht auf folgender Überlegung: Wenn z. B. ein Signal über einen längeren Zeitraum nur eine gerings Amplitude hat, wird der verfügbare Aussteuerbereich des Wandlers nicht voll ausgenutzt. Um den Aussteuerbereich besser auszunutzen und einen besseren Störabstand zu erzielen, wird die Amplitude des Signales soweit erhöht, daß der Aussteuerbereich des Wandlers ausgenutzt und der Störabstand bei der Übertragung verbessert wird. Das übertragene Signal ist dann an sich in der Amplitude verfälscht. Durch das gleichzeitig übertragene Kennsignal kann jedoch diese Amplitudenverfälschung auf der Wiedergabeseite, also nach der D/A-Rückumwandlung, wieder rückgängig gemacht werden. Die Steuerung der Verstärkung der Signale vor dem A/D-Wandler erfolgt dabei relativ langsam, z. B. mit einer Zeitkonstante einer Vielzahl von Zeilen oder mehrerer Halbbilder.

Bei einer Weiterbildung der Erfindung gemäß den Ansprüchen wird jeweils während eines bestimmten Zeitraumes, insbesondere einer Zeile, die maximal auftretende Amplitude des Signals ermittelt. Daraus wird eine während des Zeitraumes konstante Stellgröße gewonnen. Diese steuert die Verstärkung des Signales so, daß das Signal unabhängig von seiner ursprünglichen Amplitude den Aussteuerbereich des Wandlers einnimmt. Hierbei wird also jeweils ein Signalabschnitt einzeln ausgewertet und durch eine während des Zeitraumes konstante Verstärkungsänderung auf den Aussteuerbereich des Handlers gebracht.

Die Erfindung wird im folgenden anhand der Zeichnung erläutert. Darin zeigen

Figur 1 ein Ausführungsbeispiel der Erfindung und

Figur 2, 3 ein Ausführungsbeispiel für die Weiterbildung der Erfindung.

An der Klemme 1 steht das Leuchtdichtesignal mit Synchronsignal (Y + S) mit einer Maximalamplitude von 1 V, wobei mit Maximalamplitude im folgenden der Signalwert von Spitze zu Spitze gemeint ist. Das Signal (Y + S) wird über den A/D-Wandler 2 dem Coder 3 zugeführt, der die Übertragungsstrecke Ü speist. An der Klemme 4 steht das Farbdifferenzsignal (B-Y) mit einer Maximalamplitude von 1,33 V. Dieses Signal wird mit dem Amplitudeneinsteller 5 mit dem Teilerfaktor 0,75 auf die Maximalamplitude von 1 V gebracht und dem ersten Eingang des Umschalters 6 zugeführt. An der Klemme 7 steht das (R-Y) Signal mit einer Maximalamplitude von 1,05 V. Dieses Signal wird in der Teilerstufe 8 mit dem Teilerfaktor 0,95 auf eine Maximalamplitude von 1 V gebracht und dem anderen Eingang des Umschalters 6 zugeführt. Der Umschalter 6 wird von dem Coder 3 durch die halbzeilenfrequente Schaltspannung 9 so gesteuert, daß von Zeile zu Zeile abwechselnd das Signal (B-Y) und das Signal (R-Y) mit gleicher Maximalamplitude auf den A/D-Wandler 10 gelangen. Das digitale Ausgangssignal des Wandlers 10 gelangt ebenfalls auf den Coder 3. Am Ende der Übertragungsstrecke Ü liegt der Decoder 11, der digitale Ausgangssignale für Y, (B-Y) und (R-Y) liefert. Der Coder 3, die Übertragungsstrecke Ü und der Decoder 11 bilden z. B. bei einem Videorecoder mit Timeplex-Aufzeichnung die Zeitkompression bei der Aufzeichnung, die Aufzeichnung selbst und die Zeitexpansion bei der Wiedergabe.

Das digitale Leuchtdichte- und Synchronsignal am Ausgang des Decoders 11 wird mit dem D/A-Wandler 12 wieder in das analoge Leuchtdichter und Synchronsignai Y+S umgewandelt, das wieder mit einer Maximalamplitude von 1 V an der Klemme 13 zur Verfügung steht. Das digitale Ausgangssignal des Decoders 11 für die Signalfolge (B-Y), (R-Y) gelangt auf den D/A-Wandler 14, dessen Ausgang über den Umschalter 15 von Zeile zu Zeile abwechselnd auf die Eingänge des Amplitudeneinstellers 16 mit dem Faktor 1,33 und des Amplitudeneinstellers 17 mit dem Faktor 1,05 geschaltet ist. Diese Umschaltung erfolgt mit der halbzeilenfrequenten Schaltspannung 18 vom Decoder 11. An der Klemme 19 steht wieder das analoge Farbdifferenzsignal (B-Y) mit der ursprünglichen Maximalamplitude von 1,33 V und an der Klemme 20 das Farbdifferenzsignal (R-Y) mit der Originalamplitude von 1,05 V.

Die Einsteller 8,17 im Weg des (R-Y)-Signals können gegebenenfalls entfallen, da die Maximalamplitude des Signals von 1 V nur geringfügig abweicht.

Die Farbdifferenzsignale vom Ausgang des Umschalters 6 werden außerdem dem Tor 21 zugeführt, das durch den vom Coder 3 kommenden Impuls 33 mit der Dauer der Zeilenhinlaufzeit von 52 µs durchlässig gesteuert ist. Das Farbdifferenzsignal während der Zeilenhinlaufzeit wird mit dem Spitzenwertgleichrichter 22 gleichgerichtet und erzeugt an der Kondensator 23 die Stellgröße Us mit einer Zeitkonstanten von ca. 100 ms. Diese Stellgröße Us steuert über die Leitung 34 die Verstärkung des Verstärkers 24 im Weg der Farbdifferenzsignale so, daß die Maximalamplitude der Farbdifferenzsignale am Eingang des Wandlers 10 unabhängig von der ursprünglichen Amplitude den vollen Aussteuerbereich des Wandlers 10 einnimmt.

In dem Oszillator 25 wird ein Farbträger erzeugt, aus dem durch den Tastimpuls 35 mit dem Tor 26 ein Farbsynchronsignal zu Beginn jeder Zeile gewonnen wird. Dieses Farbsynchronsignal 35 wird in dem Verstärker 27 in der Amplitude durch die Stellgröße Us moduliert und dem Übertragungsweg Ü zugeführt. Das Farbsynchronsignal 35 wird mit dem Tor 32, das während der hinteren Schwarzschulter gesperrt ist, von dem Decoder 11 ferngehalten und mit dem durch den Tastimpuls 35 durchlässig geschalteten Tor 28 der Vergleichsstufe 29 zugeführt. Dort wird die Amplitude mit einem Sollwert von dem Sollwertgeber 30 in der Vergleichsstufe 29 verglichen. Diese liefert an dem Kondensator 37 eine Stellgröße Us. Diese steuert die Verstärkung des Verstärkers 31 reziprok zu der Verstärkungssteuerung des Verstärkers 24 derart, daß die Farbdifferenzsignale am Eingang des Umschalters 15 wieder ihre richtigen Amplituden haben. Wenn z. B. durch eine geringe Farbsättigung des Bildes die Farbdifferenzsignale (B-Y) und (R-Y) über einen längeren Zeitraum von mehreren Halbbildern eine geringe Amplitude haben, wird die Verstärkung des Verstärkers 24 durch die Stellgröße Us erhöht und die Verstärkung des Verstärkers 31 durch die Stellgröße Us entsprechend verringert, so daß die Signale an den Klemmen 4 und 19 bzw. 7 und 20 in ihrer Amplitude wieder übereinstimmen.

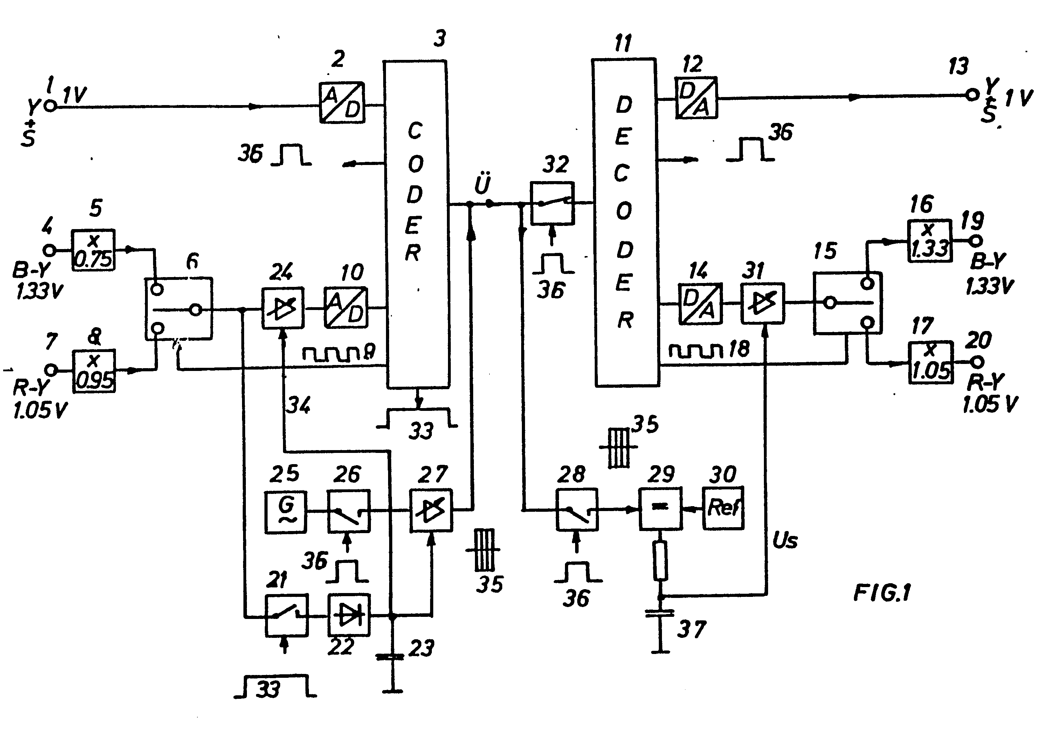

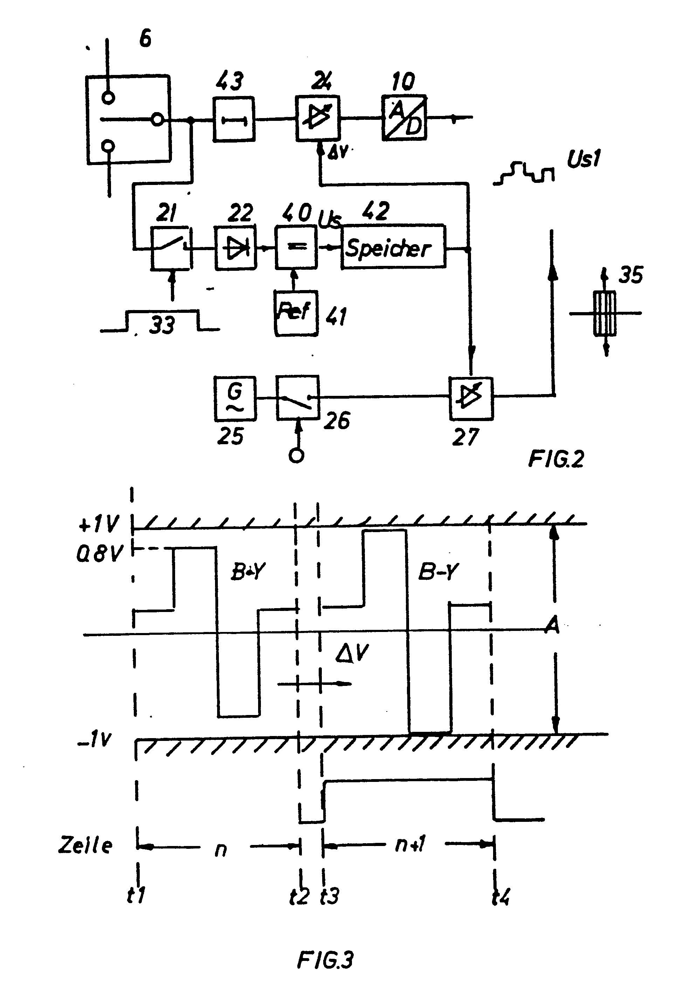

Figur 2, 3 zeigen ein Ausführungsbeispiel für eine Amplitudenänderung, die jeweils nur für eine Zeilendauer wirkt. In dem Spitzenwertgleichrichter 22 wird während der Zeile n von t1-t2 die Maximalamplitde des (B-Y)-Signales ausgewertet, die hier 0,8 V beträgt. Der Aussteuerbereich A von ± 1 V würde also dadurch nicht voll ausgenutzt. In der Vergleichsstufe 40, die von einer Referenzspannungsstufe 41 gespeist wird, wird eine Stellgröße Us gewonnen. Diese ist ein Maß für den während der Zeile n maximal auftretenden Amplitudenwert des Signales B-Y bzw. den Unterschied zwischen diesem Wert (0,8 V) und dem Aussteuerbereich (1 V) des Wandlers 10. Die Stellgröße Us wird mit dem Speicher 42 gespeichert und behält zunächst ihren konstanten Wert. Während der Zeile n + 1 von t3-t4 erscheint die Stellgröße Us am Eingang des steuerbaren Verstärkers 24, dem das Signal (B-Y) über die Zeilen-Verzögerungsstufe 43 zugeführt wird. Der Verstärker 24 erhält also das (B-Y)-Signal aus der Zeile n und die Stellgröße Us, die ein Maß für die Maximalamplitude aus der Zeile n ist. Die Stellgröße Us ändert die Verstärkung des Verstärkers 24 um den Wert Δ V so, das nunmehr in der Zeile n + 1 das Signal (B-Y) den vollen Aussteuerbereich A einnimmt. Auf diese Weise erfolgt Zeile für Zeile eine Änderung der Verstärkung des Verstärkers 24 und damit der Amplitude der Signale am Eingang des Wandlers 10 in dem Sinne, daß in jeder Zeile die Maximalamplitude der Signale den Aussteuerbereich des Wandlers 10 einnimmt. Am Eingang des Verstärkers 24 steht also die dargestellte sprunghafte Stelgröße Us1, deren Wert jeweils während einer Zeilendauer konstart ist und sich von Zeile zu Zeile ändert oder ändern kann. Zu Beginn einer Zeile wird also die Stellgröße aus der zeitlich vorangehanden Zeile gelöscht und durch die gewonnene Stellgröße der neuen Zeile ersetzt. Die Stellgröße Us1 wird wie in Fig. 1 durch Amplitudenmodulation des Farbsynchronsignals 35 übertragen.

Nach der D/A-Wandlung auf der Wiedergabeseite erfolgt wie in Fig. 1 eine Änderung der Verstärkung des Verstärkers 31 reziprok zur Änderung der Verstärkung des Verstärkers 24, derart, daß die Farbdifferenzsignale wieder ihre ursprüngliche Amplitude haben.

Geht man davon aus, daß sich das Farbsignal von Zeile zu Zeile kaum ändert, so kann der Amplitudenmeßwert der Zeile n die Farbsignalamplitude der Zeile n+2 steuern.

Die erfindungsgemäße Schaltung ist bei dem Timeplex-System besonders wichtig für die Farbdifferenzsignale, weil diese um einen hohen Faktor von etwa 5 zeitlich komprimiert und expandiert werden. Die Erfindung ist jedoch auch anwendbar für das Leuchtdichtesignal Y, um den A/D-Wandler 2 voll auszusteuern.

Der Schalter 6 in Fig. 2 kann ebenfalls auf die Referenzspannungsstufe 41 einwirken. Hiermit wird erreicht, daß die Maximalamplitudenanpaßstufen 5, 8 durch zeilenweises Schalten des Referenzpegels ersetzt werden.

## Patentansprüche

1. Schaltung zur Analog/Digital-Wandlung eines Farbfernsehsignals, das in drei getrennten Wegen (1, 4, 7) ein Leuchtdichtesignal (Y), ein erstes und ein zweites Farbdifferenzsignal (B-Y, R-Y) enthält, wobei die Farbdifferenzsignale von Zeile zu Zeile abwechselnd auftreten, dadurch gekennzeichnet, daß jeweils das einem Analog/Digital-Wandler (10) zugeführte Signal durch eine aus der ursprünglichen Amplitude des Signals abgeleitete Stellgröße (Us) in der Amplitude so gesteuert wird, daß das Signal unabhängig von seiner ursprünglichen Maximal-Amplitude stets etwa den vollen Aussteuerbereich des Analog/Digital-Wandlers (10) einnimmt und daß die Stellgröße (Us) mit einem Steuersignal über die von dem Analog/Digital-Wandler (10) gespeiste Übertragungsstrecke (Ü) übertragen und nach der Digital/Analog-Rückumwandlung (14) zur Rücksteuerung der Amplitude des Signals auf den ursprünglichen Wert dient (Verstärker 31).

2. Schaltung nach Anspruch 1, dadurch gekennzeichnet, daß die beiden Farbdifferenzsignale auf gleiche Maximalamplituden (1 V) gebracht und an denselben Analog/Digital-Wandler (10) angelegt sind.

3. Schaltung nach Anspruch 2, dadurch gekennzeichnet, daß die beiden Farbdifferenzsignals (B-Y, R-Y) über Amplitudeneinsteller (5, 8) an die Eingänge eines zeilenfrequent betätigten Umschalters (6) angelegt sind und dessen Ausgang an den Eingang des Analog/Digital-Wandlers (10) angeschlossen ist.

4. Schaltung nach Anspruch 1, dadurch gekennzeichnet, daß das Leuchtdichtesignal (Y) einschließlich Synchronimpulse und die Farbdifferenzsignals (B-Y, R-Y) an den Eingängen der Analog/Digital-Wandler (2, 10) gleiche Maximalamplituden kann.

5. Schaltung nach Anspruch 4, dadurch gekennzeichnet, daß bei der Digital/Analog-Rückumwandlung die Folge der Farbdifferenzsignale (B-Y, R-Y) an den Eingang eines Digital/Analog-Wandlers (14) angelegt und dessen Ausgang mit einem zeilenfrequent betätigten Umschalter (15) abwechselnd mit den beiden Farbdifferenzsignalwegen (19, 20) verbunden ist.

6. Schaltung nach Anspruch 5, dadurch gekennzeichnet, daß in den Farbdifferenzsignalwegen (19, 20) so bemessene Amplitudeneinsteller (16, 17) liegen, daß die Signale wieder ihre ursprünglichen, unterschiedlichen Maximalamplituden (1 V) haben.

7. Schaltung nach Anspruch 1, dadurch gekennzeichnet, daß die Stellgröße (Us) durch Spitzenwertgleichrichtung (22) des Signals gewonnen wird.

8. Schaltung nach Anspruch 7, dadurch gekennzeichnet, daß im Weg der Stellgröße (Us) ein Tiefpaß (23) mit einer Zeitkonstante in der Größenordnung von 100 ms liegt.

9. Schaltung nach Anspruch 1, dadurch gekennzeichnet, daß während eines definierten Zeitraumes (t1-t2) die Maximalamplitude des Signals (B-Y) ermittelt und mit einer daraus gewonnenen, für die Dauer des Zeitraumes konstanten Stellgröße (Us) die Amplitude des Signals so gesteuert wird, daß die Maximalamplitude den Aussteuerbereich (A) einnimmt (Fig. 2, 3).

10. Schaltung nach Anspruch 9, dadurch gekennzeichnet, daß die in einem Zeitraum (t1-t2) gewonnene Stellgröße (Us) in dem darauffolgenden Zeitraum (t3-t4) die Amplitude des um die Dauer des Zeitraumes verzögerten Signals steuert.

11. Schaltung nach Anspruch 9, dadurch gekennzeichnet, daß der Zeitraum gleich der Dauer siner Zeilenperiode ist.

12. Schaltung nach Anspruch 1, dadurch gekennzeichnet, daß das Steuersignal (35) ein zu Beginn der Zeile übertragener, mit der Stellgröße amplitudenmodulierter Schwingungszug ist.

## Claims

1. Circuit for the analogue/digital-conversion of a colour television signal which contains in three separate paths (1, 4, 7) a luminance signal (Y), a first and a second colour difference signal (B-Y, R-Y), wherein the colour difference signals occur alternately from line-to-line, <u>characterized in that</u> the respective signal applied to an analogue/digital converter (10) is so controlled in amplitude by a control magnitude (Us) derived from the original amplitude of the signal, that the signal irrespective of its original maximal amplitude always takes up almost the full control range of the analogue/digitalconverter (10) and that the control magnitude (Us), transmitted with a control signal over the transmission path fed by the analogue/digital converter (10) serves for the restoration of the amplitude of the signal to the original value (amplifier 31) after the digital/analogue conversion (14).

2. Circuit according to Claim 1, <u>characterized in that</u> the two colour difference signals are brought to equal maximal amplitudes and are applied to the same analogue/digital converter (10).

3. Circuit according to Claim 2, <u>characterized in that</u> the two colour difference signals (B-Y, R-Y) are applied to the input of a switch (6) operated at line freguency, by way of amplitude regulators (5, 8), the output of which is connected to the input of the analogue/digital converter (10).

4. Circuit according to Claim 7, <u>characterized in that</u> the luminance signal (Y) including synchronising impulses and the colour difference signals (B-Y, R-Y) have equal maximal amplitudes at the inputs of the analogue/digital converters (2, 10).

5. Circuit according to Claim 4, <u>characterized in that</u> upon the digital/analogue re-conversion, the sequence of the colour difference signals (B-Y, R-Y) is applied to the input of the digital/analogue converter (14), the output of which is alternately connected by means of a switch (15) actuated at line frequency with the paths (19, 20) of two colour difference signals.

6. Circuit according to Claim 5, <u>characterized in that</u> amplitude regulators (15, 17) are disposed in the paths of the colour difference signals (19, 20) so dimensioned that the signals have again their original different maximal amplitudes (1 V).

7. Circuit according to Claim 7, <u>characterized in that</u> the control magnitude (Us) is derived by means of peak detection (22) of the signal.

8. Circuit according to Claim 7, <u>characterized in that</u> a low-pass (23) is disposed in the path of the control magnitude (Us) having a time constant of the order of 100 ms.

9. Circuit according to Claim 1, <u>characterized in that</u> during a predetermined time interval (t1-t2) the maximal amplitude of the signal (B-Y) is determined and a control magnitude (Us) derived therefrom, and constant for the duration of the time interval, so controls the amplitude of the signals that the maximal amplitude takes up the control range (A) (Fig. 2, 3).

10. Circuit according to Claim 9, <u>characterized in that</u> the control magnitude (Us) derived in the time interval (t1-t2) controls the amplitude of the signal delayed by the duration of the time interval in the time interval (t3-t4) following thereon.

17. Circuit according to Claim 9, <u>characterised in that</u> the time interval is equal to the duration of a line period.

12. Circuit according to Claim 1, <u>characterized in that</u> the control signal (35) is an oscillation transmitted at the beginning of the line, amplitude modulated by the control magnitude.

**Revendications**

1. Commutation pour le convertisseur analogique/digital d'un signal de télévision en couleurs, comportant dans trois voies séparées (1,4, 7) un signal de luminance (Y), et un premier et deuxième signal de différence de couleur (B-Y, R-Y), les signaux de différence de couleur n'apparaissant qu'alternativement de ligne en ligne; <u>caractérisée par le fait</u> que chaque signal amené à un convertisseur analogique/digital (10) est commandé dans son amplitude par une grandeur de réglage (Us) issue de l'amplitude initiale du signal, de telle sorte que le signal occupe en permanence, indépendamment de sa première amplitude maximale, à peu près la plage intégrale de modulation du convertisseur analogique/digitale (10); que la grandeur de réglage (Us) est transmise par un signal de commande, en passant par la voie de transmission (Ü) qui est alimentée du convertisseur analogique/digital (10); qu'après la reconversion digitale/analogique (14), la grandeur de réglage sert à la remodulation de l'amplitude du signal à sa valeur initiale (amplificateur 31).

2. Commutation selon revendication 1, <u>caracterisee par le fait</u> que les deux signaux de différence de couleur sont amenés à des amplitudes maximales identiques (1 V) et reliés au même convertisseur analogique/digital (10).

3. Commutation selon revendication 2, <u>caractérisée par le fait</u> que les deux signaux de différence de couleur (B-Y, R-Y) sont reliés par des ajusteurs d'amplitude (5, 6) aux entrées d'un inverseur (6) actionné à la fréquence de ligne et dont la sortie est raccordée à l'entrée du convertisseur analogique/digital (10).

4. Commutation selon revendication 1, <u>caractérisée par le fait</u> que le signal de luminance (Y), y compris ses impulsions synchrones, et les signaux de différence de couleur (B-Y, R-Y) présentent des amplitudes maximales identiques aux entrées des convertisseurs analogiques/digitaux (2, 10).

5. Commutation selon revendication 4, <u>caractérisée par le fait</u> que lors de la reconversion digitale/analogique, le groupe des signaux de différence de couleur (B-Y, R-Y) est relié à l'entrée d'un convertisseur digital/analogique (14), dont la sortie est rattachée alternativement aux deux voies des signaux de différence de couleur (19, 20) par un inverseur actionné à la fréquence de ligne (15).

6. Commutation selon revendication 5, <u>caractérisée par le fait</u> qu'il y a dans les voies des signaux de différence de couleur (19, 20) des ajusteurs d'amplitude (16, 17) dimmensionnés de telle sorte que les signaux retrouvent leurs amplitudes maximales différentes (1 V), initiales.

7. Commutation selon revendication 1, <u>caractérisée par le fait</u> que la grandeur de réglage (Us) est obtenue par redressement des valeurs de crête (22) du signal.

8. Commutation selon revendication 7, <u>caractérisée par le fait</u> qu'un passe-bas (23) avec une constante de temps de l'ordre de grandeur de 100 ms, se situe dans la voie de la grandeur de réglage (Us).

9. Commutation selon revendication 1, <u>caractérisée par le fait</u> que durant un temps défini (t1-t2) on calcule l'amplitude maximale du signal (B-Y), et que l'on commande par une grandeur de réglage (Us), qui en résulte et qui est constante pendant cette durée, l'amplitude du signal de sorte que l'amplitude maximale occupe intégralement la plage de modulation (A); (voir schémas 2, 3).

10. Commutation selon revendication 5, <u>caractérisée par le fait</u> que la grandeur de réglage (Us) obtenue dans un espace de temps (t1-t2), commande dans un espace de temps qui suit (t3-t4), l'amplitude du signal retardé de la valeur de cette période.

11. Commutation selon revendication 9, <u>caractérisée par le fait</u> que l'espace de temps est égal à la durée d'une période de ligne.

12. Commutation selon revendication 1, <u>caracterisee par le fait</u> que le signal de commande (35) est un mouvement d'oscillation, transmis en début de ligne et modulé dans son amplitude par une grandeur de réglage.

FIG.1

FIG.2

FIG.3